Europäisches Patentamt

European Patent Office

Office européen des brevets

(19)

(11) **EP 1 394 507 A2**

(12) # EUROPEAN PATENT APPLICATION

(43) Date of publication:
**03.03.2004 Bulletin 2004/10**

(51) Int Cl.7: **G01C 15/00**, G02B 27/10, G02B 27/14

(21) Application number: **03018731.4**

(22) Date of filing: **26.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.08.2002 JP 2002245124**

(71) Applicant: **HITACHI KOKI CO., LTD.**
**Tokyo 108-6020 (JP)**

(72) Inventor: **Nishimura, Takashi**
**Hitachinaka-shi Ibaraki-ken 312-8502 (JP)**

(74) Representative: **HOFFMANN - EITLE**
**Patent- und Rechtsanwälte**
**Arabellastrasse 4**
**81925 München (DE)**

(54) **Beam splitter and laser marking apparatus**

(57)    A beam splitter (1) is configured by assembling three triangular prisms (1a, 1b 1c) having bottom surfaces formed in shapes of right isosceles triangles. A film (2) is formed on side surfaces of the prisms (1a, 1c) that include the edges of each right isosceles triangle for separating incident light. With this construction, light ($B_1$) striking the apex angle of the triangle is reflected as two beams ($B_2$)and transmitted as one beam ($B_3$) by the light separating surface. Hence, the light incident on the beam splitter is separated in three directions.

FIG.3

EP 1 394 507 A2

## Description

### BACKGROUND OF THE INVENTION

#### 1. Field of the Invention

The present invention relates to a beam splitter for dividing a single laser beam into a plurality of laser beams, and a multibeam generator and a line-beam-generating optical system using the beam splitter. The present invention also relates to a laser marking apparatus used for indoor and outdoor marking operations in house construction work.

#### 2. Description of Related Art

In house building and particularly in the beginning phase of construction, marking operations are essential for producing level lines needed to set reliable baselines for positioning various building members when machining the members and for installing the building members. Level instruments and other tools are used at the building site to achieve level measurements. A plurality of marks is made on the walls of target structure, and marking lines are formed by connecting these marks to produce the baselines for construction.

These marking lines include various line beams, such as vertical lines drawn from the floor over the wall and to the ceiling, perpendicular (right angle) lines drawn on the ceiling and made from two vertical lines, and horizontal lines drawn on the walls; ground mark dots formed on the floor; and the like.

Marking operations performed manually require at least two workers. Conventionally, marking operations have required much time and effort and have been inefficient. However, in order to overcome this problem, recently more efficient marking operations have been performed using a laser marking apparatus having a line beam irradiation function. Since one worker can easily perform marking operations using a laser marking apparatus, this apparatus is becoming an essential tool in construction work.

In order to improve the efficiency of marking operations using a laser marking apparatus, it is desirable to be able to irradiate a plurality of marking lines with a single laser marking apparatus. Hence, devices capable of irradiating two or more lines with a single apparatus are now being proposed.

Systems known in the art for irradiating a plurality of lines from a single laser marking apparatus include a system using a plurality of laser light sources and a system that obtains a plurality of lines by dividing a laser beam emitted from a single laser light source.

The former system is problematic in that the cost of the apparatus increases as more laser light sources are added.

On the other hand, the latter system uses a light-emitting optical system constructed of a plurality of half mirrors arranged serially in the laser emitting direction. An example of such a system is disclosed in Japanese patent application publication No. HEI-9-159451. In this system, however, the intensity of the light is cut in half after passing through the first half mirror and is reduced by half again when passing through the second half mirror. Since the intensity of the light is gradually reduced when passing through each of the half mirrors in this way, the light intensity of the resulting divided beams is different from each other. Hence, a different brightness is obtained for each of the plurality of line beams. Further, a plurality of half mirrors must be arranged to divide the beam, thereby increasing the complexity of the optical system and, moreover, increasing the number of optical elements.

Accordingly, most conventional laser marking apparatuses capable of irradiating a plurality of line beams are equipped with a laser light source for each line beam generated. However, as described above, the cost of the apparatus rises as the number of light sources increases. As a result, an expensive apparatus is required to perform efficient marking operations.

### SUMMARY OF THE INVENTION

In view of the foregoing, it is an object of the present invention to provide a beam splitter having a simple construction that is capable of forming a plurality of beams from a single laser beam, and a multibeam generator and a line-beam-generating optical system using the beam splitter. It is another object of the present invention to provide a low cost laser marking apparatus equipped with the above-described multibeam generator and capable of emitting a plurality of line beams.

In order to attain the above and other objects, the present invention provides a beam splitter for producing a plurality of separated beams from a single incident beam. The beam splitter includes a light transmissive member having a first surface and a second surface, a first light-separating portion formed on the first surface, and a second light-separating portion formed on the second surface.

The present invention also provides a multibeam generator. The multibeam generator includes a light source generating a light beam, and a beam splitter receiving the light beam generated by the light source, including a light transmissive member having a first surface and a second surface, a first light-separating portion formed on the first surface, and a second light-separating portion formed on the second surface.

The present invention also provides a line-beam-generating optical system. The line-beam-generating optical system includes a light source generating a laser beam, a collimating lens converting light emitted from the light source into collimated light, a triangular prism having three side surfaces, a first side surface and a second side surface of the three side surfaces forming an apex angle, a first light-separating portion being formed on the first surface and a second light-separating portion being formed on the second surface, the triangular prism receiving the collimated light at the apex angle and separating the collimated light into four light beams, and a line-beam-generating optical element disposed on at least one optical path of the four light beams emitted from the triangular prism for converting at least one light beam into at least one line beam.

The present invention also provides a laser marking apparatus. The laser marking apparatus includes a laser generating a light beam, a beam splitter receiving the light beam generated by the laser, including a light transmissive member having a first surface and a second surface, a first light-separating portion formed on the first surface, and a second light-separating portion formed on the second surface, a line-beam-generating optical element generating a line beam from a light beam separated by at least one of the first and second light-separating portions, and a support unit supporting the laser, the beam splitter, and the line-beam-generating optical element.

BRIEF DESCRIPTION OF THE DRAWINGS

The above and other objects, features and advantages of the invention will become more apparent from reading the following description of the embodiments taken in connection with the accompanying drawings in which:

Fig. 1 is a perspective view showing a beam splitter according to a first embodiment of the present invention;
Fig. 2 is a plan view showing the beam splitter in Fig. 1;
Fig. 3 is an explanatory diagram showing the principles of the beam splitter in Fig. 1 for dividing a laser beam;
Fig. 4 is an explanatory diagram showing a step for forming a light-separating film in a method for manufacturing the beam splitter in Fig. 1;
Fig. 5 is an explanatory diagram showing a step for joining three triangular prisms in the method for manufacturing the beam splitter in Fig. 1;
Fig. 6 is an explanatory diagram showing the direction in which light incident on the triangular prism is emitted;
Fig. 7 is an explanatory diagram showing in more detail the directions in which light incident on the triangular prism is emitted;
Fig. 8 is an explanatory diagram showing the direction in which light partially incident on the triangular prism is emitted;
Fig. 9 is a side view showing a multibeam generator according to the first embodiment of the present invention;
Fig. 10 is a plan view showing the multibeam generator in Fig. 9;

Fig. 11 is a side view showing a laser marking apparatus according to the first embodiment of the present invention;
Fig. 12 is a side view showing a line-beam-generating optical system provided in the laser marking apparatus in Fig. 11;
Fig. 13 is a plan view showing the line-beam-generating optical system in Fig. 12;
Fig 14 is an explanatory diagram showing the line-beam-generating optical system according to a second embodiment of the present invention;
Fig. 15 is an explanatory diagram showing the direction in which light incident on the triangular prism in Fig. 14 is emitted;
Fig. 16 is an explanatory diagram showing a modification of the line-beam-generating optical system in Fig. 14;
Fig. 17(a) is an explanatory diagram showing a relationship between a rod lens and the cross-sectional orientation of an incident beam;
Fig. 17(b) is an explanatory diagram showing another relationship between a rod lens and the cross-sectional orientation of an incident beam;
Fig. 17 (c) is an explanatory diagram showing the orientation of a dove prism;
Fig. 18 is an explanatory diagram showing a modification of the line-beam-generating optical system in Fig. 16;
Fig. 19 is a side view showing a laser marking apparatus according to the second embodiment of the present invention;
Fig. 20 is an explanatory diagram showing an optical unit provided in the laser marking apparatus in Fig. 19;
Fig. 21 is a perspective view showing a beam splitter according to a third embodiment of the present invention;
Fig. 22 is an explanatory diagram showing the principles of the beam splitter in Fig, 21 for dividing a laser beam;
Fig. 23 is an explanatory diagram showing in more detail the principles of the beam splitter in Fig. 21 for dividing a laser beam;
Fig. 24 is a perspective view showing a beam splitter according to a first modification of the third embodiment;
Fig. 25 is an explanatory diagram showing the principles of the beam splitter in Fig. 24 for dividing a laser beam;
Fig. 26 is an explanatory diagram showing in more detail the principles of the beam splitter in Fig. 24 for dividing a laser beam;
Fig. 27 is a perspective view showing a beam splitter according to a second modification of the third embodiment;
Fig. 28 is an explanatory diagram showing the principles of the beam splitter in Fig. 27 for dividing a laser beam;

Fig. 29 is a perspective view showing a beam splitter according to a third modification of the third embodiment;

Fig. 30 is an explanatory diagram showing the principles of the beam splitter in Fig. 29 for dividing a laser beam;

Fig. 31 is a side view showing a laser marking apparatus equipped with the beam splitter according to the third embodiment of the present invention;

Fig. 32 is a side view showing a line-beam-generating optical system employing the beam splitter in Fig. 21; and

Fig. 33 is a side view showing a line-beam-generating optical system employing the beam splitter in Fig. 28.

## DETAILED DESCRIPTION OF THE PREFERRED EMBODIMENTS

A beam splitter, a multibeam generator, a line-beam-generating optical system, and a laser marking apparatus as claimed in embodiments of the present invention will be described while referring to the accompanying drawings wherein like parts and components are designated by the same reference numerals to avoid duplicating description.

\<First embodiment\>

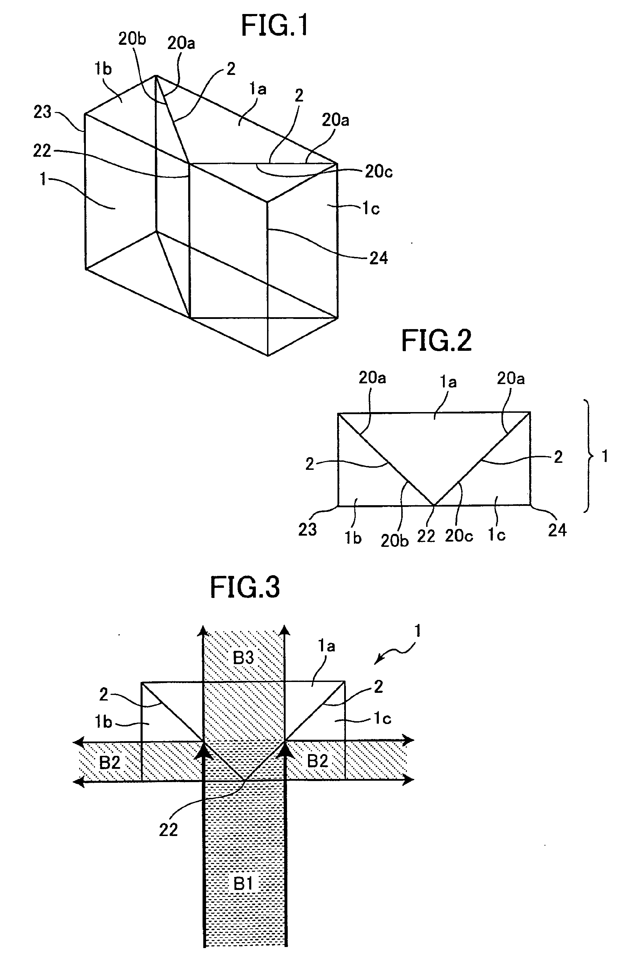

A beam splitter, a multibeam generator employing the beam splitter, and a laser marking apparatus equipped with the multibeam generator according to a first embodiment of the present invention will be described with reference to Figs. 1 through 13.

Fig. 1 is a perspective view showing the general structure of a beam splitter 1. Fig. 2 is a plan view of the beam splitter 1. The beam splitter 1 is configured by assembling three triangular prisms 1a, 1b, 1c the bottom surfaces of which form right isosceles triangles (triangular-prism-shaped optical elements (prisms) 1a, 1b, 1c). When assembled the triangular prisms 1a, 1b, and 1c form substantially a rectangular parallelepiped. More specifically, the triangular prism 1a has two side surfaces 20a having two equivalent sides that form an apex angle 22 (right angle) in the bottom surface of the right isosceles triangle. The triangular prise 1b has a side surface 20b that includes a bottom side that opposes an apex angle 23 in the bottom surface of the right isosceles triangle. Similarly, the triangular prism 1c has a side surface 20c that includes a bottom side that opposes an apex angle 24 in the bottom surface of the right isosceles triangle. The two side surfaces 20a of the triangular prism 1a are bonded to the side surface 20b of the triangular prism 1b and the side surface 20c of the triangular prism 1c, respectively. The triangular prisms 1a, 1b, and 1c are formed of a glass or plastic that is transparent to light. In the present embodiment BK7 is used as the prism material. The BK7 is a glass material having an index of refraction of 1.5. The size of the single triangular prism 1a triangular prism 1b, or triangular prism 1c can be set to the following example The height of the triangular prisms 1a, 1b, 1c is 5 mm and the length of the side perpendicular to the height direction on the side surfaces 20a is 5 mm. Accordingly, the beam splitter 1 has an overall width of 7 mm, a depth of 3.5 mm, and a height of 5 mm.

Light-separating films 2 are formed over the two side surfaces 20a for separating incident light into transmitted light and reflected light. The light-separating films 2 are positioned both between the side surfaces 20a and side surfaces 20b and the side surfaces 20a and side surfaces 20c. The two side surfaces 20a on which the light-separating films 2 are formed function as light-separating surfaces for separating incident light into transmitted light and reflected light.

The light-separating film 2 has a predetermined reflectance (approximately 67% in this example) and a predetermined transmittance (approximately 33% in this example) The light-separating film 2 can be formed of any material, provided the material can separate incident light into transmitted light and reflected light. However, it is desirable that the light-separating film 2 be formed of a metal, such as Cr or Al, or a dielectric material, such as $TiO_2$, $SiO_2$, or $MgF_2$. The light-separating film 2 is formed as a single layer or multiple layer film from these material. Multiple layer constructions may include a multiple metal layer formed by laminating metal film with metal film, a multiple dielectric layer formed by laminating films composed of dielectric material, or a hybrid layer formed by laminating metal film with dielectric film. In the present embodiment, the light-separating film 2 is a single layer dielectric film.

As shown in Fig. 3, when the beam splitter 1 is used, a laser beam B1 emitted from a light source (not shown) is injected toward the apex angle 22 of the triangular prism 1a. When the laser beam B1 is incident on the beam splitter 1, the light-separating film 2 separates the laser beam B1 into reflected beams B2 and a transmitted beam B3. For the sake of description, let us say that the laser beam B1 has a laser power of 100. Of this incident light, a power of 50 is expended in being reflected or transmitted on the left side of the drawing while the remaining power of 50 is similarly reflected or transmitted on the right side of the drawing,

In this example, the light-separating film 2 has a reflectance of approximately 67% and a transmittance of approximately 33%. Accordingly, the intensity of light reflected off the light-separating film 2 is 50x0.67=33.5. The intensity of the transmitted light is 50x(1-0.67) =16.5. These calculations are identical for the left and right sides. In other words, the intensity of light reflected to the left and right is 33.5 each, while the intensity of transmitted light is 16.5x2=33. Hence, the three separated light beams are approximately equivalent in intensity. Of the light beams separated by the beam splitter 1, the two reflected beams B2 are positioned along the same line, and the single transmitted beam B3 can be positioned along a line orthogonal to the two reflected beams B2.

The reflectance and transmittance values of the light-separating film 2 are not limited to the above example. The intensity of the two reflected beams B2 and the transmitted beam B3 are determined by these reflectance and transmittance values. The two light-separating films 2 may also have differing reflectance and transmittance values.

The beam splitter 1 has a simple construction, and three beams can be formed simply by assembling the three triangular prisms 1a, 1b, and 1c. Since the beam splitter 1 is configured of the transparent triangular prism 1a having a bottom surface in the shape of a right isosceles triangle, the two reflected beams B2 and the single transmitted beam B3 can be generated at right angles to each other. This is very convenient when mounting the beam splitter 1 in a laser marking apparatus 12 described later to draw vertical and horizontal lines and the like.

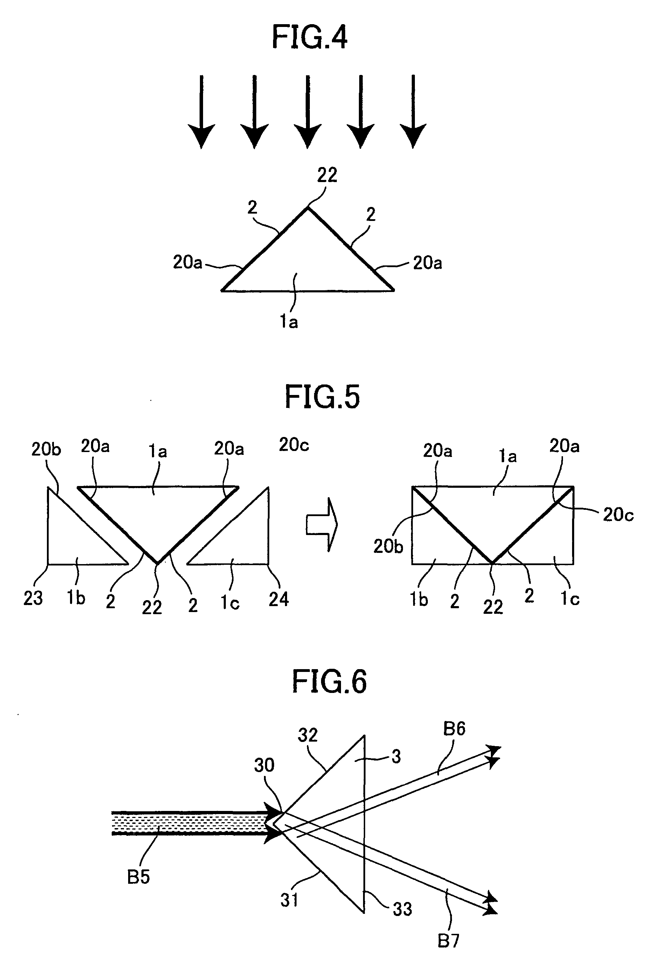

Next, a method for manufacturing the beam splitter 1 will be described. As shown in Fig. 4, the light-separating film 2, which is a single dielectric layer in this example, is formed through deposition or the like on both side surfaces 20a of the triangular prism 1a in order to transmit and reflect light at a predetermined ratio. The desirable ratio of light transmission and reflection is achieved by selecting an appropriate thickness for the light-separating film 2. In this example, the thickness of the light-separating film 2 is set to achieve a reflectance of approximately 67% and a transmittance of approximately 33%.

As shown in Fig. 5, the triangular prism 1a is bonded to the triangular prism 1b and the triangular prism 1c by fixing the light-separating film 2 formed on the two side surfaces 20a to the side surfaces 20b and the side surfaces 20c of the triangular prism 1b and triangular prism 1c, respectively. While these surfaces can be fixed with an ordinary adhesive, it is also possible to use the intermolecular force produced by the bonding surfaces when assembling the smooth surfaces of the light-separating film 2 to the side surface 20b and side surface 20c.

Next, the principles for increasing the number of laser beams generated by combining another triangular prism 3 with the beam splitter 1 will be described with reference to Figs. 6, 7, and 8. The triangular prism 3 is a transparent triangular prism having a bottom surface in the shape of a substantially right isosceles triangle.

As shown in Fig. 6, the triangular prism 3 has an apex angle 30 formed by side surfaces 31 and 32 and a side surface 33 opposite the apex angle 30. When a laser beam B5 strikes the side surface 31 and side surface 32 at the apex angle 30, laser beams B6 and B7 are emitted from the side surface 33 at specific angles.

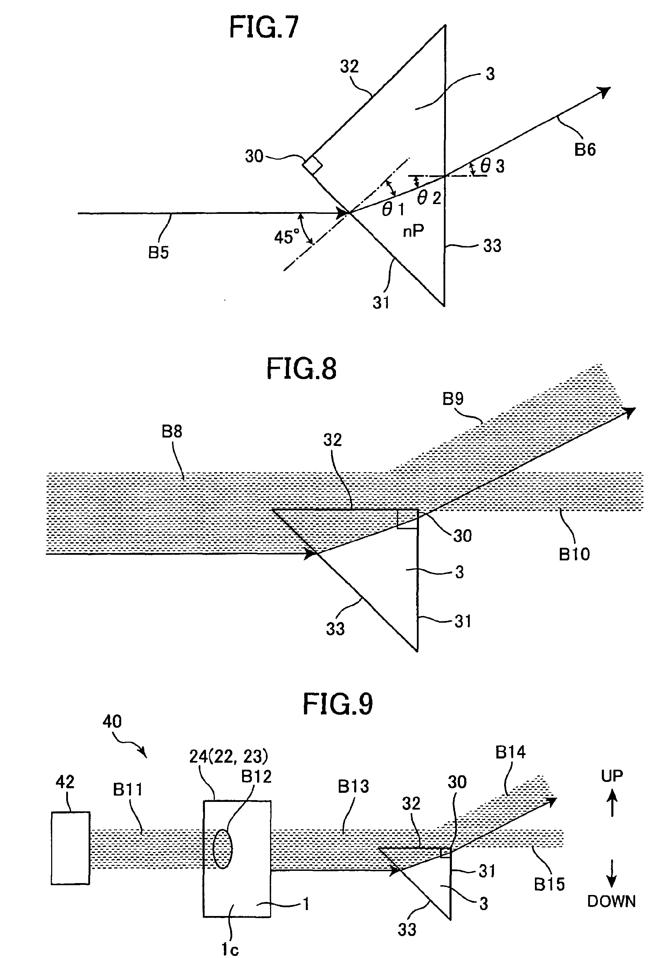

Next, the relationship between the incident angle and the outgoing angles will be described in more detail with reference to Fig. 7.

The angle of incidence for light incident on the side surface 31 of the triangular prism 3 is 45°. This light travels through the triangular prism 3 at an angle θ1. If the refractive index of the prism material is nP=1.5 (when using BK7) and that of air is 1, then the following equation (1) can be derived from Snell's law.

$$1 \times \sin45° = 1.5 \times \sin\theta1 \qquad (1)$$

From equation (1) , we can find that θ1=28° . Consequently, θ2=17°. From this, we can calculate equation (2).

$$1.5 \times \sin17° = 1 \times \sin\theta3 \qquad (2)$$

From equation (2), we can find that θ3=26°. Thus, light entering the apex angle 30 of the triangular prism 3 at an incidence angle of 45° is emitted from the side surface 33 at an outgoing angle of 26° in a slant upward direction.

As shown in Fig. 7, since the incident laser beam B5 has a degree of thickness, one-half of the laser beam B5 enters the side surface 31 of the triangular prism 3 and leaves at an outgoing angle of 26° in a slant upward direction as the laser beam B6 shown in Fig. 6. The remaining one-half enters the triangular prism 3 through the side surface 32 and leaves at an outgoing angle of 26° in a slant downward direction as the laser beam B7 shown in Fig. 6. Hence, the laser beam B5 incident on the apex angle 30 of the right isosceles triangle is split into two laser beams B6 and B7 that are emitted at an angle of 26° in a slant upward direction and in a slant downward direction, respectively.

In the example of Fig. 8, the triangular prism 3 is arranged such that only half of a laser beam B8 is incident on the side surface 33. According to the principles described above, one-half of the laser beam B8 is emitted at an angle of 26° as a laser beam B9, while the other one-half does not pass through the prism and proceeds through the air on a straight course as a laser beam B10.

In this way we can see that the outgoing angle can be modified by controlling the shape, refractive index, angle of incidence, and the like of the triangular prism 3.

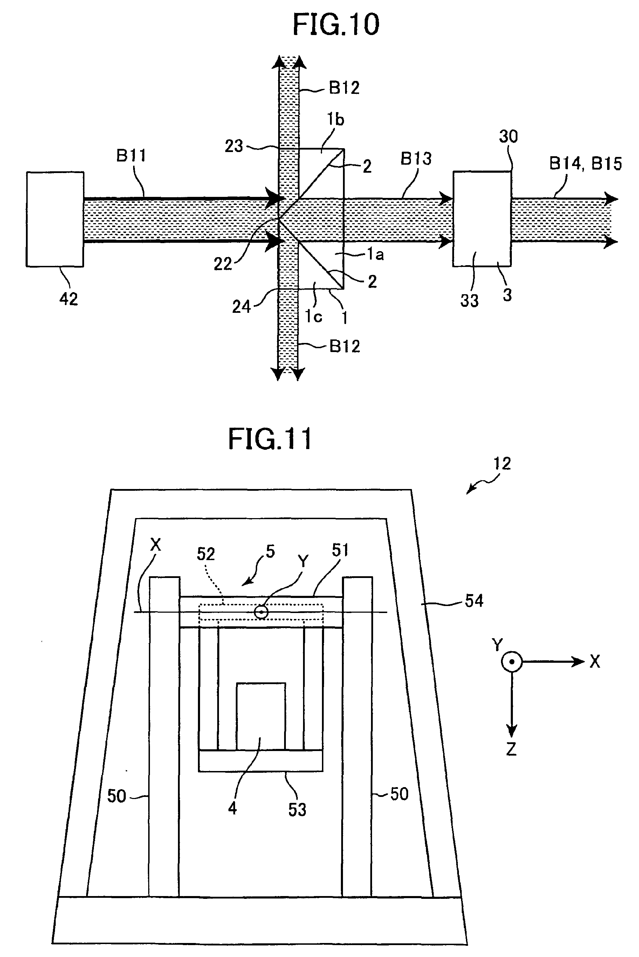

Fig. 9 is a side view and Fig. 10 is a plan view showing a multibeam generator 40 using the beam splitter 1 and the triangular prism 3.

The multibeam generator 40 includes a collimator light source 42, the beam splitter 1, and the triangular prism 3. By positioning the triangular prism 3 downstream from the beam splitter 1, the multibeam generator 40 generates a total of four beams.

The collimator light source 42 includes a semiconductor laser and a collimating lens, for example, not shown'in the drawings. As shown in Fig. 10, when a laser beam B11 emitted from the collimator light source 42 enters the beam splitter 1, the beam splitter 1 produces two reflected beams B12 traveling in directions along the same line but rotated 180° from each other (corresponding to the reflected beams B2 in Fig. 3) and one transmitted beam B13 (corresponding to the transmitted beam B3 in Fig. 3). As shown in Fig. 9, a portion of the transmitted beam B13 emitted from the beam splitter 1 passes through the triangular prism 3. The path of the light changes within the prism and the light is emitted at an angle of 26° as a laser beam B14 (corresponding to the laser beam B9 in Fig. 8) At the same time, the remainder of the transmitted beam B13 does not pass through the triangular prism 3 but continues traveling through the air in the same direction as a laser beam B15 (corresponding to the laser beam B10 in Fig. 8). Accordingly, a total of four laser beams B12, B12, B14, and B15 are produced from a single collimator light source 42. In this example only one of the laser beams outputted from the beam splitter 1, the transmitted beam B13, is split in two, but the other reflected beams B12 can also be split according to need.

Next, an example of the laser marking apparatus 12 provided with the beam splitter 1 and the triangular prism 3 will be described with reference to Figs. 11 through 13.

As shown in Fig. 11, the laser marking apparatus 12 basically includes a line-beam-generating optical system 4 for generating line beams, a support mechanism 5 for keeping the line-beam-generating optical system 4 level, and a case 54 covering the line-beam-generating optical system 4 and support mechanism 5. The line-beam-generating optical system 4 includes the beam splitter 1 and the triangular prism 3.

The support mechanism 5 employs a gimbal mechanism well known in the art. The gimbal mechanism includes a support frame 50, a large ring 51, a small ring 52, and a mounting platform 53. The large ring 51 is capable of pivoting around an x-axis in relation to the support frame 50 by means of bearings (not shown). The small ring 52 is capable of pivoting around a y-axis (perpendicular to the surface of the drawing) in relation to the large ring 51 by means of bearings (not shown) . The mounting platform 53 is fixed to the small ring 52 and supports the line-beam-generating optical system 4. With this construction, the mounting platform 53 on which the line-beam-generating optical system 4 is mounted can be maintained level.

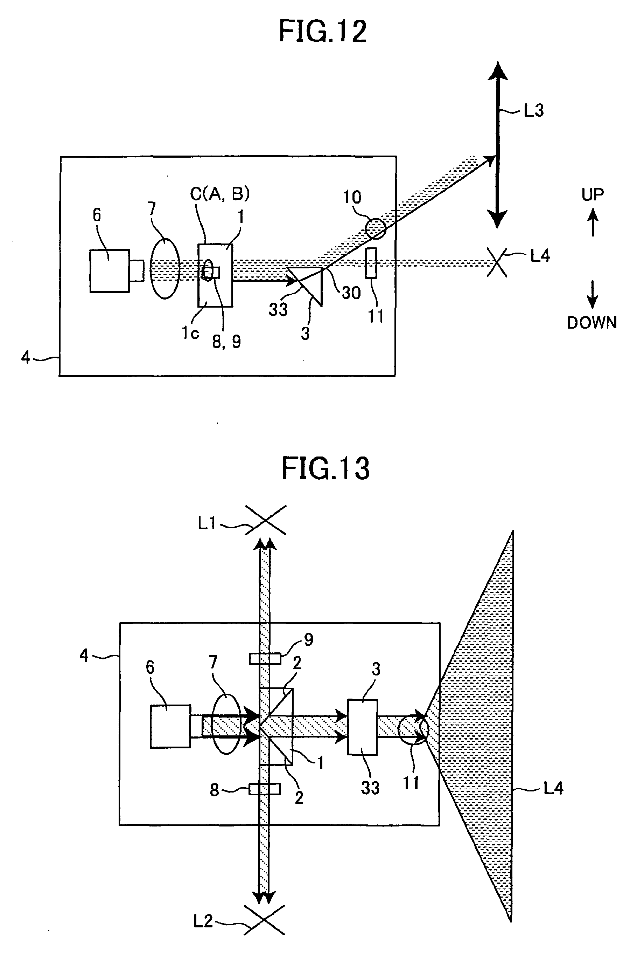

Fig. 12 is a side view and Fig. 13 is a plan view, both showing the general structure of the line-beam-generating optical system 4. The line-beam-generating optical system 4 includes a semiconductor laser 6, a collimating lens 7, the beam splitter 1, the triangular prism 3, and four glass rod lenses 8, 9, 10, and 11.

The collimating lens 7 converts a laser beam emitted from the semiconductor laser 6 into collimated light (parallel rays) traveling horizontally. Next, the collimated light passes through the beam splitter 1 of the present embodiment and is separated into three beams. Of these beams, the transmitted light enters the triangular prism 3 disposed downstream from the beam splitter 1 and is separated into two beams. Hence, four beams of collimated light are obtained from a single laser beam emitted from the semiconductor laser 6. Next, the four beams of collimated light are converted into line beams when passing through the glass rod lenses 8, 9, 10, and 11, which are one type of line-beam-generating optical elements.

The direction of the line beams generated by the glass rod lenses 8, 9, 10, and 11 are determined by the orientation in which the glass rod lenses 8, 9, 10, and 11 are installed. Hence, if horizontal line beams are desired, the rod lens is oriented with its axis on the vertical. If vertical line beams are desired, the rod lens is oriented with its axis on the horizontal. In the present embodiment, the glass rod lenses 8, 9, and 10 are arranged with their axes horizontal, while the glass rod lens 11 is oriented with its axis orthogonal to the horizontal, thereby obtaining three vertical line beams L1, L2, and L3 and one horizontal line beam L4.

The beam splitter 1 according to the embodiment described above can divide a single laser beam into a plurality of laser beams by a simple method. That is, the beam splitter 1 can generate three output beams from one incident beam very easily and at a low cost. Further, a plurality of laser beams can be easily obtained from a single light source by mounting the beam splitter 1 in the line-beam-generating optical system 4 of the laser marking apparatus 12. In other words, it is easy to form, for example, three vertical lines and a horizontal line by applying the beam splitter 1 to the laser marking apparatus 12. As a result, a laser marking apparatus for irradiating a plurality of line beams can be obtained at a low cost

<Second embodiment>

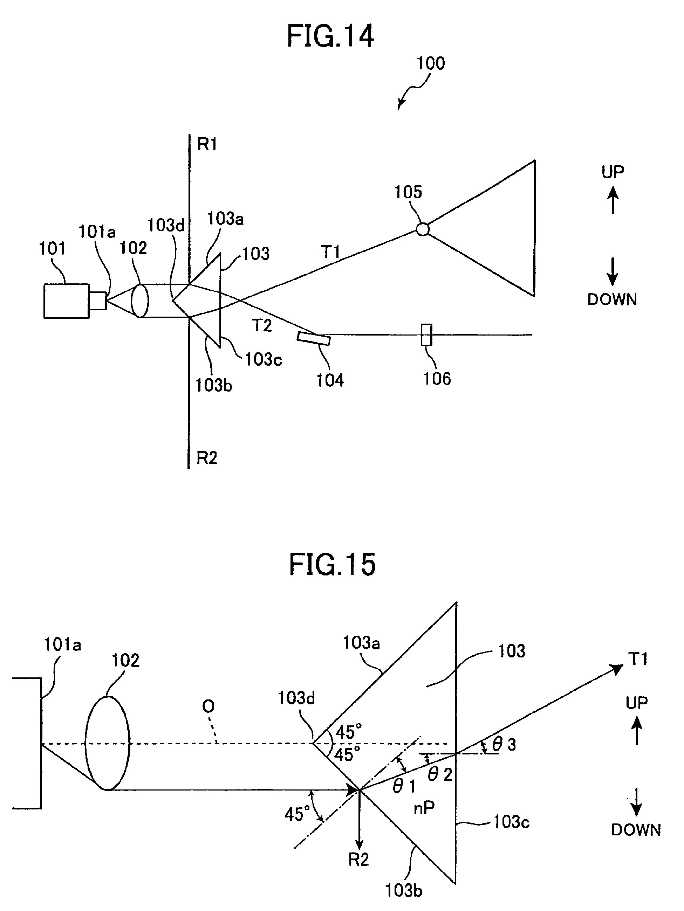

A line-beam-generating optical system and a laser marking apparatus equipped with the optical system according to a second embodiment of the present invention will be described with reference to Figs. 14 through 20. Fig. 14 is an explanatory diagram (side view) showing a line-beam-generating optical system 100 according to the present embodiment.

The line-beam-generating optical system 100 includes a laser light source 101, a collimating lens 102, a triangular prism 103, a mirror 104, and rod lenses 105 and 106. The laser light source 101 is provided with a laser emitting surface 101a and is disposed such that the laser emitting surface 101a is facing in a horizontal direction. The triangular prism 103 is formed of a glass or plastic that is transparent to light and has a bottom surface in the shape of a right isosceles triangle. The triangular prism 103 includes two side surfaces 103a and 103b that have two equivalent sides that form an apex angle 103d in the bottom surface of a right isosceles triangle, and a side surface 103c having a bottom side opposite the apex angle 103d. The apex angle 103d of the triangular prism 103 faces the laser emitting surface 101a through the collimating lens 102.

Unlike the triangular prism 1a in the first embodiment, a light separating film is not formed on any of the three side surfaces 103a, 103b, or 103c in the present embodiment. However, the side surfaces 103a and 103b function as light separating surfaces having a reflectance (several percent, for example) and a transmittance ((100 - several) percent, for example) for reflecting a portion of the incident light and transmitting the remainder.

When light emitted from the laser emitting surface 101a passes through the collimating lens 102, the collimating lens 102 converts the light to parallel rays (collimator light) having a predetermined thickness and traveling horizontally. When the collimator light subsequently strikes the apex angle 103d side of the triangular prism 103, the triangular prism 103 separates the light into two beams of reflected light R1 and R2 and two beams of transmitted light T1 and T2. Hence, a portion of the incident light is reflected off the side surface 103a and travels vertically upward in the drawing as the reflected light R1. Another portion of the incident light is reflected off the side surface 103b and travels downward in the drawing as the reflected light R2. Another portion of the incident light passes through the side surface 103b, through the inside of the triangular prism 103, and is bent a predetermined angle by refraction before being emitted from the side surface 103c as the transmitted light T1. The remaining portion of incident light passes through the side surface 103a and through the inside of the triangular prism 103 and is bent a predetermined angle by refraction before being emitted from the side surface 103c as the transmitted light T2. In the present embodiment, the transmitted light T1 is used for irradiating a vertical line, while the transmitted light T2 is used for irradiating a horizontal line.

The mirror 104 reflects the transmitted light T2 in order to change the direction of the light to a horizontal direction, The rod lens 105 is disposed with its axis running horizontally, while the rod lens 106 is disposed with its axis oriented vertically. As a result, the transmitted light T1 is converted to a vertical line beam by the rod lens 105, while the T2 is converted to a horizontal line beam by the rod lens 106.

Next, the course of light incident on the triangular prism 103 and emitted therefrom will be described in detail with reference to Fig. 15.

The apex angle 103d of the triangular prism 103 confronts the laser emitting surface 101a. That is, the triangular prism 103 is oriented such that an optical axis O extending from the laser emitting surface 101a bisects the apex angle 103d. Accordingly, one half of the incident light strikes the side surface 103a, while the other half strikes the side surface 103b.

The angle of light incident on the side surface 103b is 45°. A portion of this light proceeds directly into the prism at an angle θ1. If the refractive index of the prism material is nP=1.5 (in the case of BK7) and the refractive index of air is 1, then the following equation (3) can be derived from Snell's law.

$$1 \times \sin45° = 1.5 \times \sin\theta1 \qquad (3)$$

From equation (3), we find that θ1=28°. Consequently, θ2=17°. With this data, we can derive the following equation.

$$1.5 \times \sin17° = 1 \times \sin\theta3 \qquad (4)$$

From equation (4), we find that θ3=26°.

Accordingly, a portion of the light entering the side surface 103b at an incidence angle of 45° is emitted from the side surface 103c as the transmitted light T1 at an outgoing angle of 26° above the horizontal.

The remainder of light striking the side surface 103b at an incidence angle of 45° is reflected at an angle of reflection of 45°, equivalent to the angle of incidence, forming the reflected light R2. Hence, the reflected light R2 travels vertically downward, shifted 90° downward from the optical axis O of the incident light.

Since the incident light has a degree of thickness, one-half of the incident light is incident on the side surface 103b. A portion of the one-half of the incident light is emitted at an outgoing angle of 26° (transmitted light T1) and the remainder is reflected vertically downward (reflected light R2). The remaining one-half of the incident light is incident on the side surface 103a. A portion of the remaining one-half of the incident light is emitted at an outgoing angle of 26° below the horizontal (transmitted light T2) and the remainder is reflected vertically upward (reflected light R1). Hence, light incident on the apex angle 103d of the right isosceles triangle is divided into four beams of light emitted vertically upward, vertically downward, 26° above the horizontal, and 26° below the horizontal, respectively.

Since collimated light is incident on the apex angle 103d side of the triangular prism 103 in the line-beam-generating optical system 100 described above, four light beams can be generated from one beam of incident light. That is, the line-beam-generating optical system 100 generates two light beams substantially perpendicular to the direction of incident collimated light and two light beams substantially equivalent to the direction of incident collimated light. Hence, by mounting the line-beam-generating optical system 100 in a laser marking apparatus, it is possible to obtain two vertical beams, one horizontal line beam, and one vertical line beam from a single incident beam. The vertical beams are suitable for ground marks, while the line beams are suitable for drawing vertical lines or horizontal lines.

As the laser light source 101 of the present embodiment, it is desirable to use a laser, such as a green laser, which generates a laser beam having high circularity, that is, shaped very close to a perfect circle.

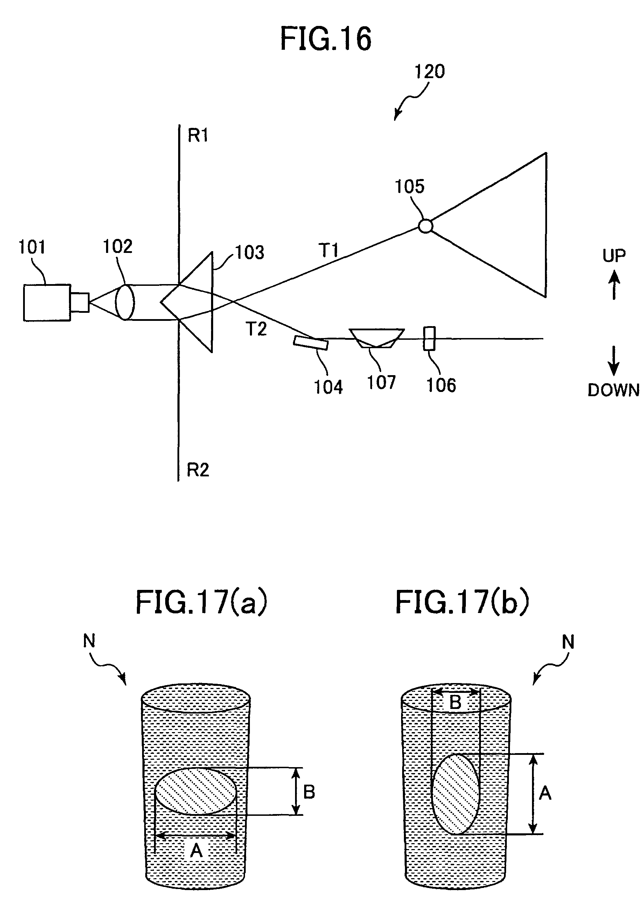

Fig. 16 is an explanatory diagram (side view) showing a line-beam-generating optical system 120 that is a modification of the line-beam-generating optical system 100. In this modification the laser light source 101 is a red semiconductor laser. Generally, the beam shape from red semiconductor lasers is elliptical with low circularity. Hence, when separating a red laser beam emitted from the red semiconductor laser into four beams with the triangular prism 103 and converting those beams directly into line beams, the vertical lines and horizontal lines are generated with different widths. Therefore, a dove prism 107 is disposed along the light path of the transmitted light T1 or transmitted light T2 in the present modification in order to generate approximately equivalent line widths for the vertical and horizontal lines.

As in the line-beam-generating optical system 100 in Fig. 14, the collimating lens 102 in the line-beam-generating optical system 120 converts light emitted from the laser light source 101 into collimated light. Since the normal beam emitted from a red semiconductor laser has an elliptical cross-section, the cross-section of the collimated beam produced by the collimating lens 102 is also elliptical. Therefore, all four beams produced by the triangular prism 103 have elliptical cross-sections.

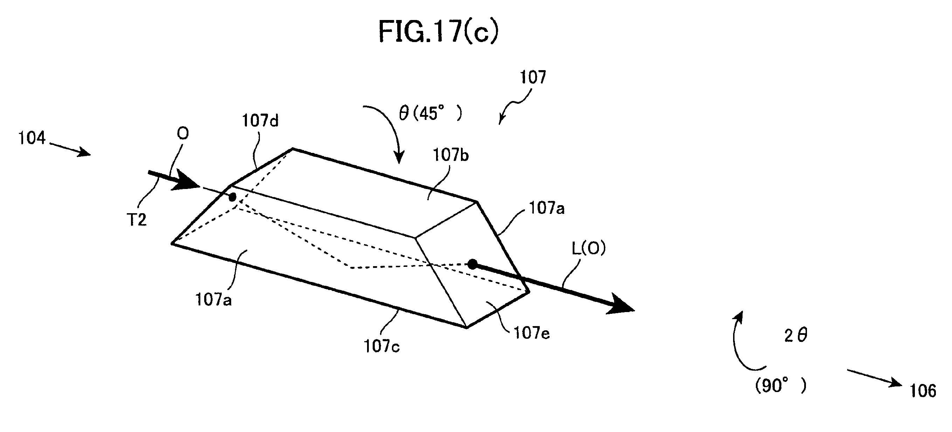

Now let us consider when an elliptical beam having a major axis A and a minor axis B is incident on a rod lens N (105, 106). As shown in Fig. 17 (a), when the elliptical beam strikes the rod lens N with its major axis A oriented orthogonal to the axial direction of the rod lens N, then the acquired line beam width is the minor axis B. However, as shown in Fig. 17(b), when the elliptical beam strikes the rod lens N with its major axis A parallel to the axial direction of the rod lens N, the acquired line beam width is the major axis A. Therefore, in order to generate vertical and horizontal lines of the width B from both the rod lens 105 and the rod lens 106, the major axis A of the transmitted light T1 must be orthogonal to the axial direction of the rod lens 105, as shown in Fig. 17(a), and the major axis A of the transmitted light T2 must be orthogonal to the axial direction of the rod lens 106, as shown in Fig. 17(a).

However, with the arrangement in the line-beam-generating optical system 120, the axes of the rod lens 105 and rod lens 106 are orthogonal to one another. In the present modification, therefore, the dove prism 107, serving as an image rotating device, is provided on the light path of the transmitted light T1 or transmitted light T2 to convert the orientation of the cross-sectional beam shape.

In this modification, the laser light source 101 generates a beam with the major axis A oriented vertically. In this case, the relationship between the transmitted light T1 and the rod lens 105 is shown in Fig. 17(a), where the major axis A of the transmitted light T1 is orthogonal to the axial direction of the rod lens 105. On the other hand, the relationship between the transmitted light T2 and the rod lens 106 is shown in Fig. 17(b), where the major axis A of the transmitted light T2 is parallel to the axial direction of the rod lens 106. Therefore, the dove prism 107 is provided on the path of the transmitted light T2, and specifically at a position between the mirror 104 and rod lens 106.

As shown in Fig. 17(c), the dove prism 107 includes two side surfaces 107a, a bottom surface 107c, and a top surface 107b that are parallel to a lengthwise axis L; and an incident surface 107d and outgoing surface 107e that are slanted in relation to the lengthwise axis L. The side surfaces 107a are trapezoids. The dove prism 107 is oriented such that the lengthwise axis L matches the optical axis O of the transmitted light T2. The dove prism 107 is in its reference position when the bottom surface 107c is positioned horizontally. The dove prism 107 is in an angle θ position when rotated to exactly an angle θ from the reference position about the lengthwise axis L. When the dove prism 107 is in the angle θ position, the cross-sectional shape of the transmitted light T2 beam is rotated exactly 2θ. In the present modification, the dove prism 107 is oriented in an angle 45° position, such that the cross-sectional shape of the transmitted light T2 beam is rotated 90°. Hence, the transmitted light T2 emitted from the dove prism 107 can strike the rod lens 105 in the orientation shown in Fig. 17(a).

With this construction, both the transmitted light T1 and T2 are incident on the rod lens 105 and the red lens 106 such that the major axis A of the beam cross-sections are orthogonal to the axial directions of the rod lenses, as shown in Fig. 17(a). Accordingly, both the acquired vertical line beam and horizontal line beam have the same line width B (minor axis of the ellipse).

In this modification described above, the laser light source 101 generates a beam with the major axis A aligned vertically. However, the laser light source 101 may also generate a beam having the major axis A aligned horizontally. In this case, the relationship between the transmitted light T2 and the rod lens 106 is shown in Fig. 17 (a), where the major axis A of the transmitted light T2 is orthogonal to the axial direction of the rod lens 106. However, the relationship between the transmitted light T1 and the rod lens 105 is shown in Fig. 17(b), where the major axis A of the transmitted light Ti is parallel to the axial direction of the rod lens 105. Hence, by providing the dove prism 107 along the path of the transmitted light T1, that is, between the triangular prism 103 and rod lens 105, the transmitted light T1 can be made to strike the rod lens 105 at the orientation shown in Fig. 17(a).

The laser light source 101 may also generate a beam having its major axis A oriented in an arbitrary direction. In this case, two dove prisms 107 can be provided one on each optical path of the transmitted light T1 and T2 to rotate the beam cross-section of the transmitted light T1 and T2 only the angle required to be appropriately incident on the corresponding rod lens 105 and rod lens 106.

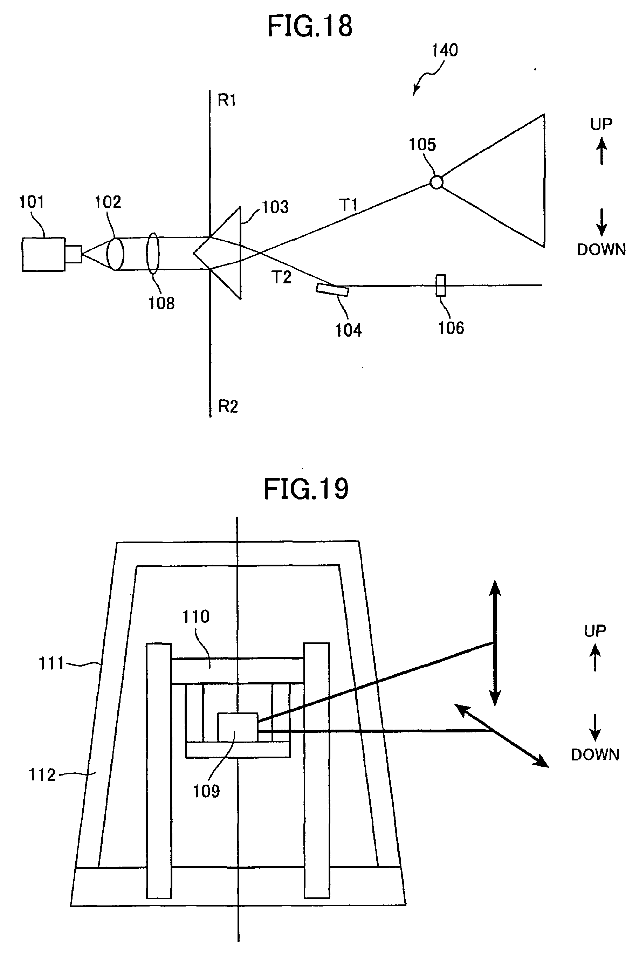

Fig. 18 is an explanatory diagram (side view) showing a line-beam-generating optical system 140, which is a modification of the lire-beam-generating optical system 120. Unlike the line-beam-generating optical system 120, the line-beam-generating optical system 140 is not provided with the dove prism 107, but instead includes an anamorphic lens 108 disposed downstream from the collimating lens 102.

The anamorphic lens 108 converts an aspect ratio of the cross section of the elliptical collimator light, changing the cross-sectional beam shape to a circular shape. The aspect ratio represents the circularity of the ellipse-The anamorphic lens 108 converts elliptical collimator light to circular collimator light in which both the major and minor axes of the cross-sectional beam shape are equivalent to the minor axis B (Figs. 17(a) and 17(b)), that is, in which the beam shape is circular. When this circular beam is divided by the triangular prism 103, the transmitted light T1 and transmitted light T2 formed by this division are also circular beams having a major and minor axes equivalent to the minor axis B. Hence, a vertical line of width B and a horizontal line of width B can be obtained by the rod lens 105 and rod lens 106.

Although the anamorphic lens 108 is used in this modification, any optical member capable of converting elliptical collimator light to circular collimator light can be used in place of the anamorphic lens 108.

Fig. 19 is an explanatory diagram showing the general structure of a laser marking apparatus 111 equipped with the line-beam-generating optical system 100 described above. Specifically, the laser marking apparatus 111 includes an optical unit 109 for generating line beams, a support mechanism 110 for keeping the optical system level, and a case 112 covering the optical unit 109 and support mechanism 110. The support mechanism 110 is identical in structure to the support mechanism 5 described in the first embodiment and, therefore, a description. of the support mechanism 110 is omitted.

The laser marking apparatus 111 of the present embodiment employs a green laser as the laser light source 101. Since the green laser has high beam circularity, a circular beam in cross section can be formed without using the dove prism 107 or the anamorphic lens 108. For this reason, the optical unit 109 is equipped with the line-beam-generating optical system 100 (Fig. 14) in the present embodiment, but the line-beam-generating optical system 120 (Fig. 16) or the line-beam-generating optical system 140 (Fig. 18) may also be used when employing a different type of laser.

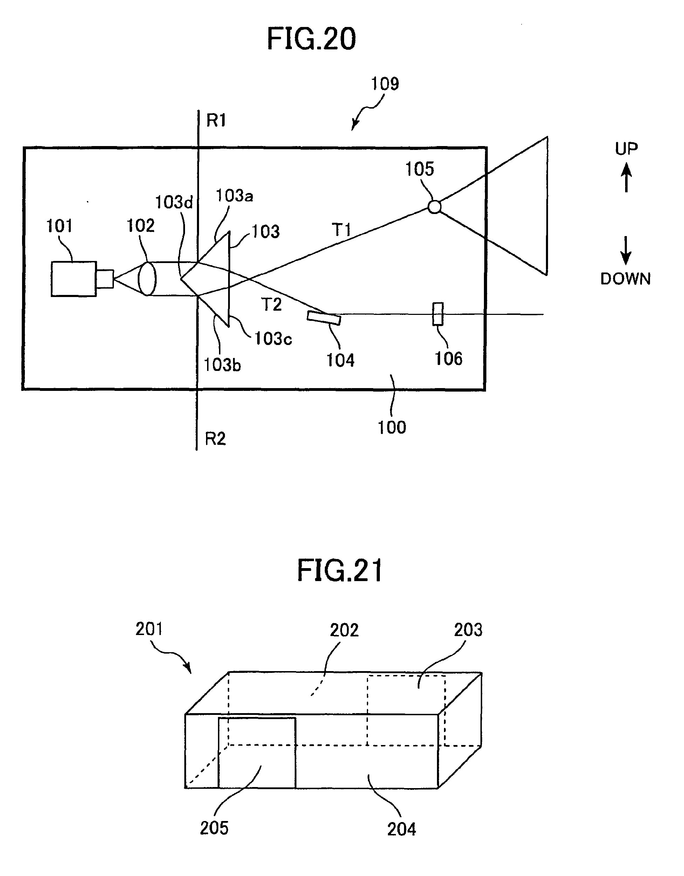

Fig. 20 is an explanatory diagram (side view) showing the structure of the optical unit 109. Light emitted from the laser light source 101 passes through the collimating lens 102, becoming collimated light that has a predetermined size and travels horizontally. Next, the collimated light strikes the triangular prism 103 from the apex angle 103d side. Reflected light R1 and reflected light R2 formed by light reflected off the side surfaces 103a and 103b travel upward and downward in the vertical directions and become dot lights. The transmitted light T1 and transmitted light T2 that pass through the side surfaces 103a and 103b are bent at a predetermined angle by the effects of refraction when passing through the triangular prism 103 and are emitted from the side surface 103c. Since the transmitted light T2 is used for irradiating a horizontal line, the mirror 104 is used to direct the light in a horizontal direction. Next, the transmitted light T1 and transmitted light T2 are converted to line beams by the rod lens 105 and rod lens 106, respectively. That is, the transmitted light T1 is converted to a vertical line beam and the transmitted light T2 to a horizontal line beam.

With the laser marking apparatus 111 having the construction described above, two line beams and two dot lights can be obtained from a single light source.

By using the line-beam-generating optical system 100, line-beam-generating optical system 120, or line-beam-generating optical system 140 according to the embodiment described above, four laser beams can be separated from a single laser beam according to a simple method. Further, since four laser beams can easily be obtained from a single laser light source 101 by equipping the laser marking apparatus 111 with the line-beam-generating optical system 100, line-beam-generating optical system 120, or line-beam-generating optical system 140, line beams for laser marking can be generated at a low cost. As a result, it is possible to provide a two-line-beam, two-dot-beam laser marking apparatus at a low cost.

<Third embodiment>

Next, a beam splitter and a laser marking apparatus equipped with the beam splitter according to a third embodiment of the present invention will be described with reference to Figs. 21 through 33.

Fig. 21 shows a beam splitter 201 according to the third embodiment. The beam splitter 201 is formed of glass or plastic that is transparent to light. In the present embodiment, the beam splitter 201 is formed using BK7, which is a glass material having an index of refraction of 1,5. The beam splitter 201 is a rectangular parallelepiped and has flat optical surfaces 202 and 204 that are opposing side surfaces and are parallel to each other. In this example, the beam splitter 201 has a length of 20 mm, a height of 10 mm, and a depth (distance between the optical surfaces 202 and 204) of 10 mm.

A first light separating film 203 is formed on a portion of the optical surface 202 for separating incident light into transmitted light and reflected light. A second light separating film 205 is formed on a portion of the optical surface 204. Both the first light separating film 203 and second light separating film 205 are single-layer or multiple-layer films including metal film or dielectric film, as with the light-separating film 2 described in the first embodiment. In this example, the first light separating film 203 has a reflectance of 33% and a transmittance of 67%. The second light separating film 205 has a reflectance of 50% and a transmittance of 50%

As with the light-separating film 2 described in the first embodiment, the first light separating film 203 and second light separating film 205 can be formed by deposition and should be formed at a thickness for obtaining the desired reflectance and transmittance.

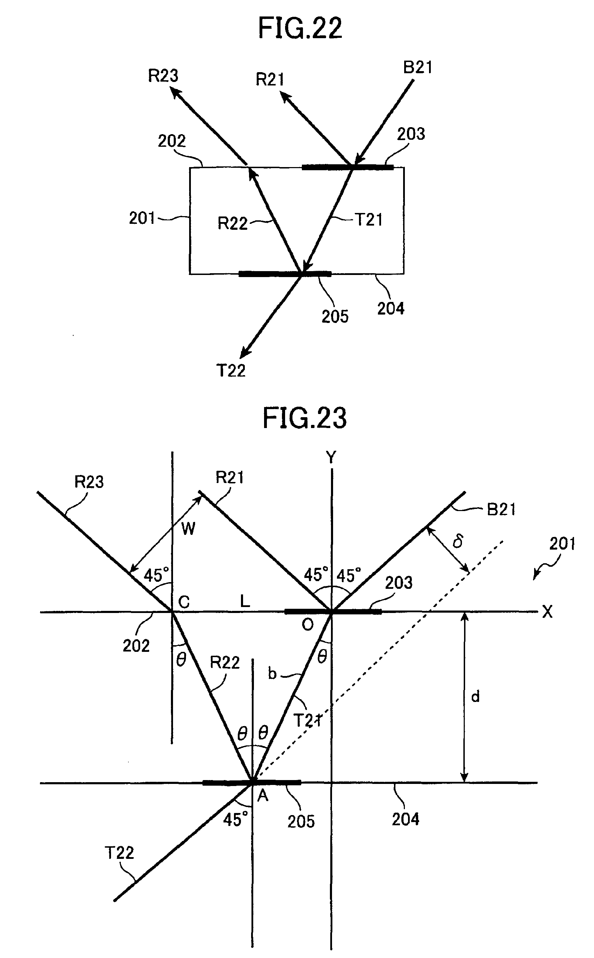

Fig. 22 is a plan view showing the beam splitter 201. An incident beam B21 strikes the first light separating film 203 at a slant, and specifically at an incidence angle of 45°. A portion (in this example 33%) of the incident beam B21 is reflected, forming a reflected light R21. The remainder of the incident beam B21 (in this example 67%) becomes a transmitted light T21 and passes through the beam splitter 201. When the transmitted light T21 reaches the second light separating film 205, a portion of the transmitted light T21 (in this example 50%) is reflected, forming a reflected light R22. The reflected light R22 passes through the beam splitter 201 and is emitted from the optical surface 202 as a reflected light R23. The remainder of the transmitted light T21 (in this example 50%) passes through the second light separating film 205 becoming a transmitted light T22. Accordingly, three beams of separated light R21, R23, and T22 are acquired from the beam splitter 201. The separated light R21, R23, and T22 each have substantially the same intensity (33% = 67% x 50%)

Here, the reflectance and transmittance values for the first light separating film 203 and second light separating film 205 are not limited to the example described above. The intensities of the separated light R21, R23, and T22 are determined based on these reflectance and transmittance values.

Next, the principles for dividing the incident beam B21 into three light beams R21, R23, and T22 will be described in detail with reference to Fig. 23.

As shown in Fig. 23, the collimated incident beam B21 is incident at an angle of 45° to the normal of the optical surface 202 (point of incidence O). A portion of the incident beam B21 is reflected at an angle of 45° to the normal of the first light separating film 203 as the reflected light R21. The remaining light of the transmitted light T21 passes through the beam splitter 201 at an angle θ to the normal.

When the refractive index of air is 1 and the refractive index of the beam splitter 201 is n in this example, we have the following equation based on Snell's law.

$$1\sin45° = n\sin\theta \qquad (5)$$

The second light separating film 205 reflects a portion of the transmitted light T21 at an angle θ in relation to the normal, the reflected light becoming the reflected light R22. After passing through the beam splitter 201, the reflected light R22 is emitted from the optical surface 202 as the reflected light R23.

According to Snell's law, the reflected light R23 forms an angle of 45° to the normal of the optical surface 202, which is the output surface. The remaining light of the transmitted light T21 passes through the second light separating film 205, becoming the transmitted light T22. Since the transmitted light T22 forms an angle of 45° to the normal of the second light separating film 205 according to Snell's law, the transmitted light T22 is parallel to the incident beam B21.

By setting the incidence point O of the incident beam B21 on the first light separating film 203 as the origin, the normal through the incidence point O as the y-axis, and the axis orthogonal to the y-axis as the x-axis, then the equation for the line of the transmitted light T21 is as follows.

$$y = \cot\theta \cdot x \qquad (6)$$

If the distance in the y-axis direction between the first light separating film 203 and the second light separating film 205 is d, then the equation for a straight line through the second light separating film 205 is as follows.

$$y = -d \qquad (7)$$

Accordingly, the coordinates for an intersecting point A between the transmitted light T21 and the second light separating film 205 is A(-dtan θ , -d) from equations (6) and (7).

The length b of the line segment OA is;

$$b = ((-d\tan\theta)^2 + (-d)^2)^{1/2}$$
$$= d(1+\tan^2\theta)^{1/2} \qquad (8)$$

Accordingly, an offset amount δ between the incident beam B21 and the transmitted light T22 is represented as follows.

$$\delta = b\sin(45°-\theta)$$
$$= d(1+\tan^2\theta)^{1/2} \cdot \sin(45°-\theta) \qquad (9)$$

By calling the output point of the reflected light R23 at the optical surface 202 C and the length of the segment OC L, we have the following equation.

$$L = b\sin\theta \cdot 2$$

$$= 2\,d(1+\tan^2\theta)^{1/2} \cdot \sin\theta$$

$$= 2\,d\tan\theta \qquad (10)$$

Accordingly, the interval w between the reflected light R21 and reflected light R23 is:

$$w = L\cos45° = 2d(1+\tan^2\theta)^{1/2} \cdot \sin\theta\,\cos45°$$

$$= 2\,d\tan\theta \cdot \cos45° \qquad (11)$$

For example, if the refractive index for the material of the beam splitter 201 is 1.5, then according to equation (5) $1\sin45° = 1.5\sin\theta$ and, thus, $\theta = 28°$. Further, if the distance between the optical surface 202 and optical surface 204 is 10 mm, then we can find the offset amount $\delta$ between incident beam B21 and the transmitted light T22 by substituting $\theta = 28°$ in equation (9).

$$\delta = 10\,(1+\tan^2 28°)^{1/2} \bullet \sin(45° - 28°) = 3.3\text{mm}$$

Here, the distance in the x-axis direction between the incidence point O on the first light separating film 203 and the intersecting point A on the second light separating film 205 is L/2, and $L/2 = d\tan\theta$ according to equation (10). Therefore, we know that the distance in the x-axis direction between the incidence point of light on the first light separating film 203 and the incidence point of light on the second light separating film 205 is approximately $d\tan\theta$ Accordingly, in order to ensure that the transmitted light T21 will always reach the second light separating film 205 when the incident beam B21 is incident on the first light separating film 203, it is necessary to offset the first light separating film 203 and second light separating film 205 on the optical surface 202 and optical surface 204 by a distance $d\tan\theta$ in the x-axis direction. Specifically, the first light separating film 203 and the second light separating film 205 in Fig. 22 should be formed such that the approximate center of the first light separating film 203 in the left and right direction is offset from the approximate center of the second light separating film 205 in the left and right direction by a distance $d\tan\theta$ in the left and right direction.

Similarly, the interval w between the reflected light R21 and reflected light R23 is as follows.

$$w = 2 \cdot 10\,(1+\tan^z 28°)^{1/2} \cdot \sin28°\,\cos45° = 7.5\text{mm}$$

Therefore the beam splitter 201 can easily form the transmitted light T22 traveling along an optical path parallel to the incident beam B21 and the reflected light R21 and reflected light R23 traveling along optical paths orthogonal to the incident beam B21.

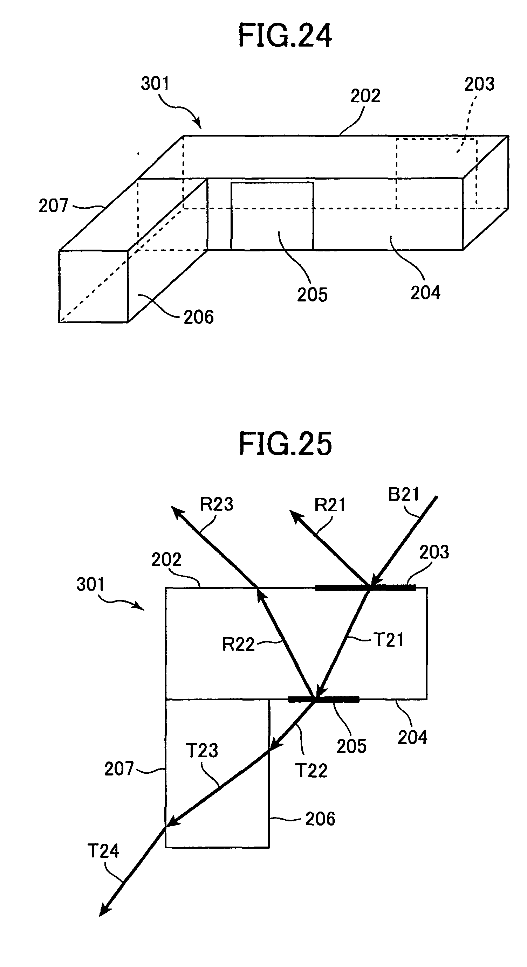

Next, a beam splitter 301 according to a first modification of the present embodiment will be described with reference to Figs. 24 and 25. The beam splitter 301 is able to produce an outgoing transmitted light T24 having an offset amount $\delta$ with the incident beam B21 of zero (0).

As shown in Fig. 24, the beam splitter 301 is configured by assembling two rectangular parallelepipeds into an L-shape. Hence, like the beam splitter 201 in Fig. 21, the beam splitter 301 has the optical surface 202 and optical surface 204 as opposing side surfaces. However, the beam splitter 301 also has optical surfaces 206 and 207 as two separate opposing side surfaces. The optical surfaces 206 and 207 are parallel to each other and orthogonal to the optical surface 202 and optical surface 204. The distance between the optical surfaces 202 and 204 is equal to the distance between the optical surfaces 206 and 207. The dimensions of the beam splitter 301 in this example are 30 mm (length of the optical surfaces 202 and 204) $\times$ 25 mm (length of the optical surfaces 206 and 207 + distance between the optical surfaces 202 and 204). The height of the beam splitter 301 is 10 mm The distance between the optical surface 202 and the optical surface 204 is 10 mm. The distance between the optical surface 206 and optical surface 207 is 10 mm.

The beam splitter 301 is formed of glass or plastic that is transparent to light. In this example, the beam splitter 301 is formed of BK7, a glass material having a refractive index of 1.5.

As with the beam splitter 201 in Fig. 21, the first light separating film 203 is formed on a portion of the optical surface 202, and the second light separating film 205 is formed on a portion of the optical surface 204. The positional relationship and reflectance and transmittance of the first light separating film 203 and second light separating film 205 in the present modification are identical to those of the first light separating film 203 and second light separating film 205 formed on the beam splitter 201.

As shown in Fig. 25, the incident beam B21 strikes the beam splitter 301 at a slant. The generated reflected light R21, R22, and R23, and transmitted light T21 and T22 are identical to those generated in the beam splitter 201 described with reference to Fig. 22. The transmitted light T22 strikes the optical surface 206 and again passes through the beam splitter 301 as a transmitted light T23 and is emitted from the optical surface 207 as the transmitted light T24. The offset amount $\delta'$ between the incident beam B21 and the transmitted light T24 is zero (0).

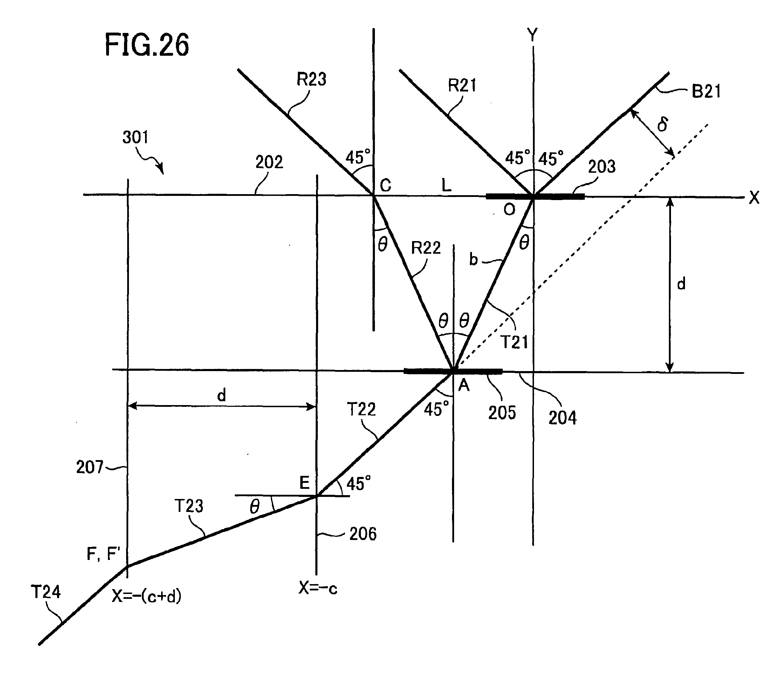

Next, the reason that the $\delta'$ is zero will be described with reference to Fig. 26. Here, the distance in the x-axis direction between the incident point O (origin) on the first light separating film 203 and the optical surface 206 will be called c.

The transmitted light T22 forms an angle of 45° to the normal of the second light separating film 205 and passes thrcugh the point A (-dtan θ , -d). Therefore, we have the following equation for the straight line of the transmitted light T22.

$$y=x+d(\tan\theta-1) \qquad (12)$$

The equation for the straight line including the optical surface 206 is:

$$x=-c \qquad (13)$$

Since the distance between the optical surface 206 and optical surface 207 is d, an equation for a straight line including the optical surface 207 is as follows.

$$x=-(c+d) \qquad (14)$$

Hence, the coordinates for an intersecting point E of the transmitted light T22 and optical surface 206 is E(-c, d (tan θ -1)-c) according to equations (12) and (13). Further, since the transmitted light T23 forms an angle θ with the normal of the optical surface 206, the slope of an equation for a straight line including the transmitted light T23 is tan θ. Similarly, since this straight line passes through the point E(-c, d(tanθ-1)-c), the equation for the straight line is:

$$y=\tan \theta \cdot x + (c+d)(\tan\theta-1) \qquad (15)$$

The coordinates for an intersecting point F of a straight line including the transmitted light T23 and the optical surface 207 is F(-(c+d), -(c+d)) according to equations (14) and (15)

Here an equation for the line including the incident beam B21 is

$$y=x \qquad (16)$$

The coordinates of an intersecting point F' between the incident beam B21 and the optical surface 207 is F' (-(c+d), -(c+d)) according to equations (14) and (16). Hence, F and F' are equivalent. Further, since the point F is the outgoing point of the transmitted light T24, we know that the incident beam B21 and the transmitted light T24 are on the same line.

As described above, when the space between the optical surfaces 206 and 207 is made equivalent to the space between the optical surfaces 202 and 204, it is necessary not only to position the optical surfaces 206 and 207 orthogonal to the optical surfaces 202 and 204, but also to set the distance in the x-axis direction from the incidence point O (y-axis) to the optical surface 206 greater than the distance in the x-axis direction from the incidence point O (y-axis) to the outgoing point (A). This is because the transmitted light T22 must be emitted from the beam splitter 301 once off the optical surface 204 and then be incident into the beam splitter 301 again on the optical surface 206.

Hence, the relationship shown by the following inequality (17) is necessary.

$$d\tan\theta < c \qquad (17)$$

In other words, the distance between the incidence point on the first light separating film 203 and the optical surface 206 in the direction parallel to the optical surfaces 202 and 204 (x-axis direction) must be greater than dtan θ. Accordingly, the beam splitter 301 can be formed by setting the distance between the optical surface 206 and the first light separating film 203 in the x-axis direction greater than dtan θ. For example, the distance between the optical surface 206 and the approximate center of the first light separating film 203 in the left and right direction in Fig. 25 is set greater than dtan θ. More preferably, the distance between the optical surface 206 and the left edge of the first light separating film 203 (the edge on the optical surface 206 side) is set greater than dtan θ.

By forming the outgoing light beam on the same line as the incident beam as described above, the laser marking apparatus is convenient for drawing vertical and horizontal lines.

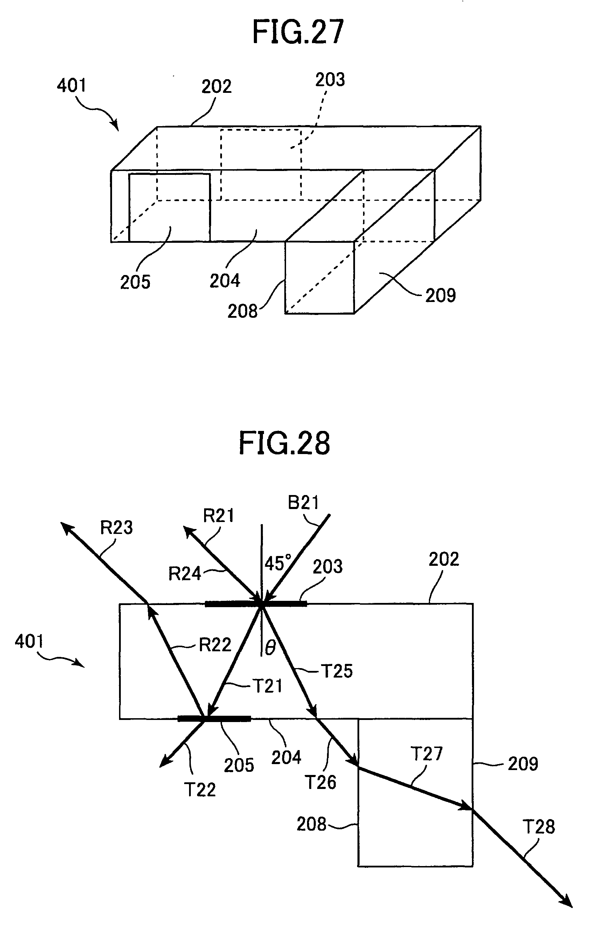

Next, a beam splitter 401 according to a second modification of the third embodiment will be described with reference to Figs. 27 and 28. A feature of the beam splitter 401 is that a portion of the reflected light R21 returns along the same optical path as the reflected light R21 to be incident on the beam splitter 401 again.

As shown in Fig. 27, the beam splitter 401 is configured of two rectangular parallelepipeds assembled in an L shape. Hence, like the beam splitter 201 in Fig. 21, the beam splitter 401 has the optical surface 202 and optical surface 204 as opposing side surfaces. However, the beam splitter 401 also has optical surfaces 208 and 209 as two separate opposing side surfaces. The optical surfaces 208 and 209 are parallel to each other and orthogonal to the optical surfaces 202 and 204. The distance between the optical surfaces 202 and 204 is equal to the distance between the optical surfaces 208 and 209. The dimensions of the beam splitter 401 in this example are 30 mm (length of the optical surfaces 202 and 204) × 25 mm (length of the optical surfaces 208 and 209 + distance between the optical surfaces 202 and 204). The height of the beam splitter 401 is 10 mm. The distance between the optical surfaces 202 and 204 is 10 mm. The distance between the optical surfaces 208 and 209 is 10 mm.

The beam splitter 401 is formed of glass or plastic that is transparent to light. In this example, the beam splitter 401 is formed of BK7, a glass material having a refractive index of 1.5.

As with the beam splitter 201 in Fig. 21, the first light separating film 203 is formed on a portion of the optical surface 202, and the second light separating film 205 is formed on a portion of the optical surface 204. The positional relationship and reflectance and transmittance of the first light separating film 203 and second light separating film 205 in the present modification are identical to those of the first light separating film 203 and second light separating film 205 formed on the beam splitter 201.

As shown in Fig. 28, the incident beam B21 strikes the beam splitter 401 at a slant. The generated reflected light R21, R22, and R23, and transmitted light T21 and T22 are identical to those generated in the beam splitter 201 described with reference to Fig. 22. The reflected light R21 perpendicularly strikes a rod lens (not shown), which is positioned along the line of the reflected light R21. Several percent of the light incident on this rod lens is reflected back along the same optical path of the reflected light R21 as a reflected light R24. The reflected light R24 strikes the first light separating film 203 and passes through the beam splitter 401 as a transmitted light T25. The transmitted light T25 forms an angle $\theta = 28°$ to the normal. The light is emitted from the optical surface 204 as a transmitted light T26 at an angle of 45° to the normal. The transmitted light T26 is subsequently incident on the optical surface 208, passes again through the beam splitter 401 as a transmitted light T27, and is emitted from the optical surface 209 at an angle of 45° to the normal as a transmitted light T28.

As with the beam splitter 301 described with reference to Fig. 26, the distance between the optical surfaces 208 and 209 is identical to that between the optical surfaces 202 and 204, and the optical surfaces 208 and 209 are orthogonal to the optical surfaces 202 and 204. Further, the transmitted light T28 is positioned along the same line as the reflected light R24, provided that the distance between the optical surface 208 and the first light separating film 203 along an axis parallel to the optical surfaces 202 and 204 is greater than dtan $\theta$, because the transmitted light T28 results from light emitted from the optical surface 204 and subsequently incident on the optical surface 208.

In this modification, the beam splitter 401 can form two beams of light R21 and T28 that travel along optical paths orthogonal to the incident beam B21. Hence, the beam splitter 401 is convenient for drawing vertical and horizontal lines when used in a laser marking apparatus, for example.

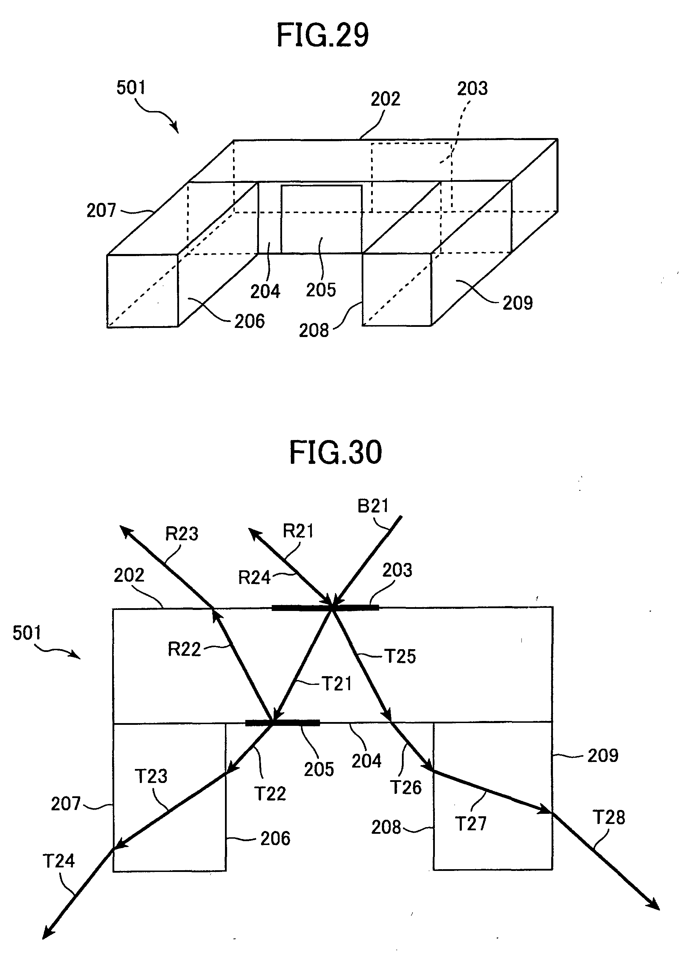

Next, a beam splitter 501 according to a third modification of the third embodiment will be described with reference to Figs. 29 and 30. The beam splitter 501 is constructed by combining the beam splitter 301 of Fig. 24 and the beam splitter 401 of Fig. 27. Hence, the beam splitter 501 can produce the transmitted light T24 along the same line as the incident beam B21 and the transmitted light T28 along the same line as the reflected light R24.

As shown in Fig. 29, the beam splitter 501 is configured of three rectangular parallelepipeds assembled in a squared U-shape. Hence, the beam splitter 501 has the optical surfaces 202 and 204, the optical surfaces 206 and 207, similar to the beam splitter 301, and also the optical surfaces 208 and 209, similar to the beam splitter 401 The beam splitter 501 is also formed of glass or plastic that is transparent to light. In the present modification, the beam splitter 501 is formed of BK7, which is a glass material having a refractive index of 1.5.

As with the beam splitter 301 and beam splitter 401, the first light separating film 203 is formed on a portion of the optical surface 202, and the second light separating film 205 is formed on a portion of the optical surface 204. The positional relationships of the optical surfaces 202, 204, 206, 207, 208, and 209, and the first light separating film 203 and second light separating film 205, as well as the reflectance and transmittance of the first light separating film 203 and second light separating film 205 are identical to those described for the beam splitter 301 and beam splitter 401. The distances between the optical surfaces 202 and 204, the optical surfaces 206 and 207, and the optical surfaces 208 and 209 are all identical (10 mm for example).

As shown in Fig. 30, after passing through the second light separating film 205, the transmitted light T22 strikes the optical surface 206, passes again through the beam splitter 501 as the transmitted light T23, and is emitted from the optical surface 207 as the transmitted light T24. Further, the reflected light R24, which is the reflected light of the reflected light R21, strikes the first light separating film 203, passes again through the beam splitter 501 at an angle to the normal of $\theta = 28°$ as the transmitted light T25, and is emitted at an angle of 45° from the optical surface 204 as the transmitted light T26. The transmitted light T26 strikes the optical surface 208, passes again through the beam splitter 501 as the transmitted light T27, and is emitted at an angle of 45° from the optical surface 209 as the transmitted light T28 As a result, the transmitted light T24 travels along the same line as the incident beam B21, and the reflected light R24 is positioned along the same line as the transmitted light T28.

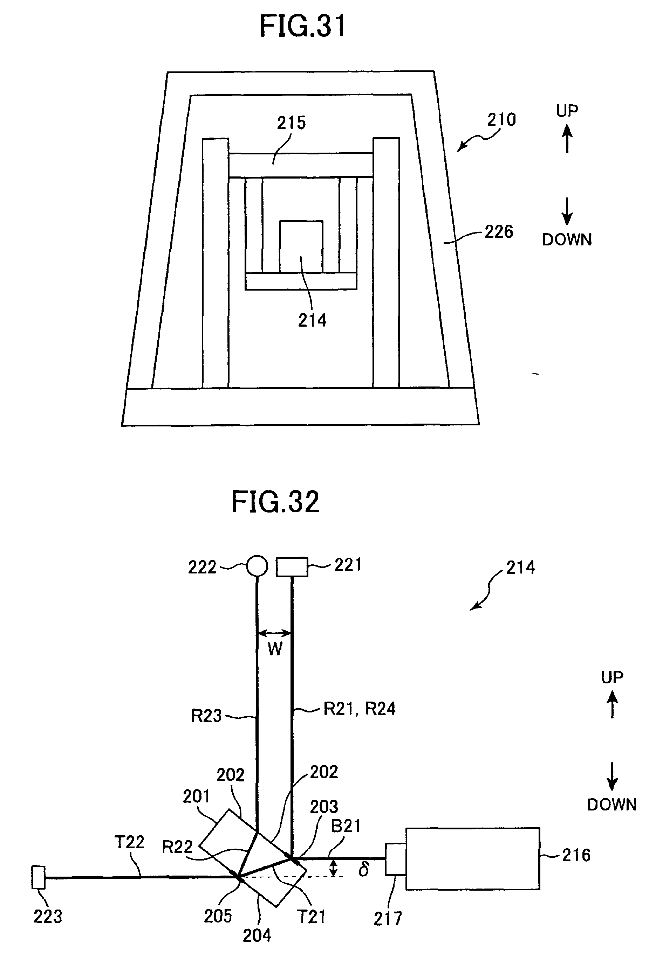

Next, a description of mounting the beam splitter 201 (Fig. 21) according to the present embodiment in a laser marking apparatus will be described with reference to Figs. 31 and 32.

As shown in Fig. 31, a laser marking apparatus 210 basically includes a line-beam-generating optical system 214 for generating line beams, a support mechanism 215 for keeping the line-beam-generating optical system 214 level, and a case 226 for covering the line-beam-generating optical system 214 and support mechanism 215. Since the support mechanism 215 has an identical structure to the support mechanism 5 described in the first embodiment, a description of the support mechanism 215 has been omitted.

Fig. 32 is a side view showing the general structure of the line-beam-generating optical system 214. The line-beam-generating optical system 214 includes a semiconductor laser 216, a collimating lens 217, the beam splitter 201, and three rod lenses 221, 222, and 223.

The semiconductor laser 216 is disposed such that its optical axis is oriented horizontally The collimating lens 217 converts a laser beam emitted from the semiconductor laser 216 into the incident beam B21 that is a collimated light (parallel rays), which has a circular beam cross section. In this example, the diameter of the incident beam B21 is set to 2 mm. The beam splitter 201 is oriented such that the normal to the optical surface 202 forms an angle of 45° with the optical axis of the semiconductor laser 216 The distance between the optical surface 202 and optical surface 204 is 10 mm, and the beam splitter 201 has a length of 20 mm and a height of 10 mm.

Of incident light on the first light separating film 203, 33% is reflected and 67% is transmitted. Accordingly, 33% of the incident beam B21 is reflected off the first light separating film 203 as the reflected light R21. The remaining 67% of this light passes through the beam splitter 201 as the transmitted light T21. Of the incident light on the second light separating film 205, 50% is reflected and 50% transmitted. Hence, 50% of the transmitted light T21 is reflected off the second light separating film 205 as the reflected light R22. After passing through the beam splitter 201, the reflected light R22 is emitted from the optical surface 202 as the reflected light R23. The remaining 50% of the transmitted light T21 passes through the second light separating film 205 as the transmitted light T22. Both the reflected light R21 and the reflected light R23 are emitted at an angle of 45° to the normal of the optical surface 202. Accordingly, the reflected light R21 and reflected light R23 are emitted in a vertical direction.

The distance w between the reflected light R21 and reflected light R23 can be found from equation (11).

$$w = 2 \cdot 10 \ (1 + \tan^2 28°)^{1/2} \cdot \sin 28° \ \cos 45° = 7.5mm$$

The offset amount δ between the incident beam B21 and transmitted light T22 is found by substituting θ = 28° into equation (9).

$$\delta = 10 \ (1 + \tan^2 28°)^{1/2} \cdot \sin \ (45° - 28°) = 3.3mm$$

The rod lenses 221 and 222 are disposed along the optical paths of the vertically traveling reflected light R21 and R23 for converting the reflected light R21 and R23 into line beams. The rod lens 221 disposed on the optical path of the reflected light R21 is oriented horizontally with the axial direction of the lens parallel to the optical axis of the semiconductor laser 216. The rod lens 222 is disposed along the optical path of the reflected light R23 and is oriented horizontally in its axial direction but in a direction orthogonal to the rod lens 221. Accordingly, the two line beams emitted from the rod lens 221 and rod lens 222 are vertical lines that cross each other.

Further, the rod lens 223 is disposed along the optical path of the transmitted light T22. The axis of the rod lens 223 is vertically oriented. Hence, the rod lens 223 produces a horizontal line beam. Since the offset amount δ between the incident beam B21 and transmitted light T22 is 3.3 mm, the transmitted light T22 is emitted from a position 3.3 mm lower than the optical axis of the semiconductor laser 216. However, by mounting the beam splitter 301 (Fig. 25) according to the first modification in place of the beam splitter 201, the offset amount δ between the incident beam B21 and transmitted light T22 can be kept to zero. Therefore it is possible to match the height of the beam emitted from the semiconductor laser 216 to the height of the horizontal line beam.

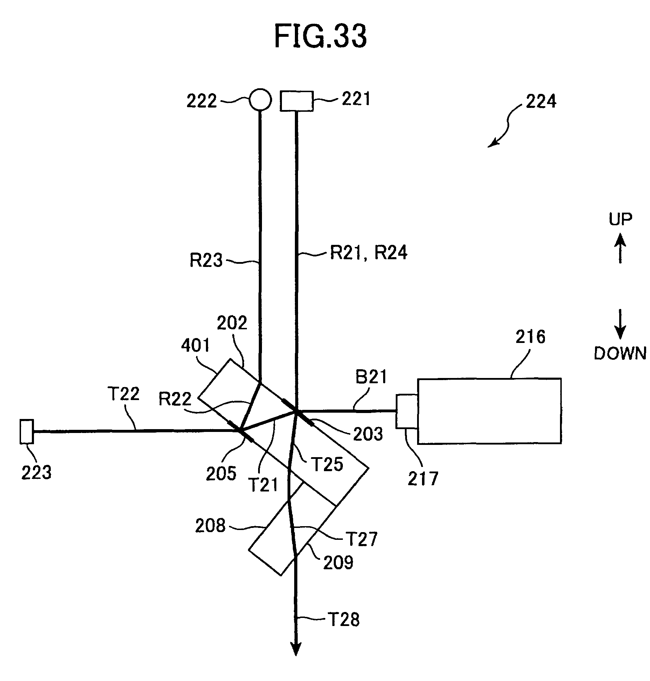

Further, a portion of the light in the reflected light R21 that is perpendicularly incident on the surface of the rod lens 221 becomes the reflected light R24, which returns along the same optical path as the reflected light R21. Fig. 33 is a side view showing a line-beam-generating optical system 224 equipped with the beam splitter 401 (Fig. 28) according to the second modification in place of the beam splitter 201. In the line-beam-generating optical system 224, the beam splitter 401 produces the reflected light R24 and transmitted light T28 on the same line. In other words, the intersecting point between crossed beams produced by the rod lens 221 and rod lens 222 is positioned along the same axis as the transmitted light T28. Therefore, by providing the line-beam-generating optical system 224 in the laser marking apparatus 210 of Fig. 31 in place of the line-beam-generating optical system 214 (Fig. 32), the transmitted light T28 is emitted vertically downward from the laser marking apparatus 210, enabling the production of point beams for ground marking.

Similarly, by providing the beam splitter 501 (Fig 30) according to the third modification in the line-beam-generating optical system 214 of Fig. 32 in place of the beam splitter 201, the height of the beam emitted from the semiconductor laser 216 can be matched to the height of the emitted horizontal line beam and a laser marking apparatus capable of emitting point beams for ground marking can be easily produced. Further, the direction of the reflected light R21 or reflected light R23 can be changed using a mirror or other optical device.

The beam splitters 201, 301, 401, or 501 according to the present embodiment described above can divide a single laser beam into a plurality of laser beams by a simple method. Further, a plurality of laser beams can be easily obtained from a single light source by mounting one of the beam splitters 201, 301, 401, or 501 in the optical system of the laser marking apparatus 210. Hence, a plurality of laser line beams for marking can be generated at a low cost, As a result, it is possible to provide a low cost laser marking apparatus capable of irradiating a plurality of line beams.

While the invention has been described in detail with reference to specific embodiments for a beam splitter, multibeam generator, line-beam-generating optical system, and laser marking apparatus, it would be apparent to those skilled in the art that various modifications and variations may be made therein without departing from the spirit of the invention.

For example, while a dielectric film is used as the light separating film in the first and third embodiments, metal films formed of Cr, Al, or the like can be used.

As in the first embodiment, the light-separating film 2 can be formed on the side surface 103a and side surface 103b of the triangular prism 103 in the second embodiment as well, thereby adjusting the ratios of the reflected light R1 and transmitted light T2 and the reflected light R2 and transmitted light T1 to appropriate values.

The dimensions of the beam splitter are not limited to the values given in the above embodiments, but can be set to appropriate values according to the application.

In Fig. 14, the mirror 104 is disposed only in the optical path of the transmitted light T2. However, similar type of mirrors may be provided in the optical paths of the transmitted light T2, reflected lights R1 or R2, or the like to change the corresponding optical paths.

**Claims**

1.  A beam splitter for producing a plurality of separated beams from a single incident beam, comprising:

    a light transmissive member having a first surface and a second surface;
    a first light-separating portion formed on the first surface; and
    a second light-separating portion formed on the second surface.

2.  The beam splitter as claimed in claim 1, wherein:

    the first light-separating portion separates a portion of the single incident beam into a reflected light and a transmitted light;
    the second light-separating portion separates a remaining portion of the single incident beam into a reflected light and a transmitted light; and
the beam splitter outputs two beams of reflected light and one beam of transmitted light.

3.  The beam splitter as claimed in claim 1 or 2, wherein:

    the light transmissive member is a transparent optical member in a shape of a triangular prism having three side surfaces; and
    the first light-separating portion and the second light-separating portion are formed on two of the three side surfaces on the triangular prism.

4.  The beam splitter as claimed in claim 3, wherein the optical member is a triangular prism having a bottom surface substantially in a shape of a right isosceles triangle.

5.  The beam splitter as claimed in claim 1, wherein:

    the light transmissive member comprises a first optical member, a second optical member, and a third optical member that are transparent triangular prisms, each of the transparent triangular prisms having:

        a bottom surface substantially in a shape of a right isosceles triangle;
        two side surfaces that include two sides that form an apex angle in the bottom surface; and
        an opposing side surface that includes a side opposing the apex angle in the bottom surface;
        the two side surfaces of the first optical member are bonded to the opposing side surface of the second optical member and to the opposing side surface of the third optical member; and
        the first light-separating portion and the second light-separating portion are formed on the two bonded side surfaces.

6.  The beam splitter as claimed in claim 2, or claims 2 and 3 wherein the first and second light-separating portions have a reflectance of approximately 67%.

7.  The beam splitter as claimed in claim 1, wherein;

    the first surface and the second surface are parallel to each other;
    the first light-separating portion separates the single incident beam into a first reflected light beam and a first transmitted light beam; and
    the second light-separating portion separates the first transmitted light further into a second reflected light beam and a second transmitted light beam.

8. The beam splitter as claimed in claim 7, wherein the first and second light-separating portions are formed such that the distance between the first light-separating portion and second light-separating portion along an axis parallel to the first and second surfaces is approximately d·tan θ, where θ is an angle of refraction when the incident beam is incident on the first light-separating portion at an angle of approximately 45° and d is a distance between the first surface and the second surface.

9. The beam splitter as claimed in claim 7 or 8, wherein the light transmissive member further comprises a third surface and a fourth surface that sequentially transmit light transmitted through the second light-separating portion, the third surface and the fourth surface being parallel to each other and orthogonal to the first surface and the second surface.

10. The beam splitter as claimed in claim 9, wherein the distance between the first light-separating portion and the third surface along an axis parallel to the first and second surfaces is greater than d·tan θ, where θ is an angle of refraction when the incident beam is incident on the first light-separating portion at an angle of approximately 45° and d is a distance between the first surface and the second surface.

11. The beam splitter as claimed in claim 9 or 10, wherein a distance between the third surface and the fourth surface is substantially equivalent, or equal, to a distance between the first surface and the second surface, and an optical path of light transmitted through the fourth surface falls on an extended line passing through an optical path of the incident beam.

12. The beam splitter as claimed in any of claims 9 to 11, wherein the light transmissive member further comprises a fifth surface and a sixth surface that sequentially transmit light that is reflected off the first light-separating portion and subsequently reflected off a predetermined reflecting member, the fifth and sixth surfaces being parallel to each other and orthogonal to the first and second surfaces.

13. The beam splitter as claimed in claim 12, wherein a distance between the fifth and sixth surfaces is substantially equivalent, or equal to a distance between the first and second surfaces, and an optical path of light transmitted through the sixth surface falls on an extended line passing through an optical path of light reflected off the predetermined reflecting member.

14. The beam splitter as claimed in any of the preceding claims, wherein the first and second light-separating portions are formed of a light-separating film.

15. A multibeam generator comprising:

    a light source generating a light beam; and
    the beam splitter of any of the preceding claims, the beam splitter receiving the light beam generated by the light source.

16. The multibeam generator as claimed in claim 15, further comprising a line-beam-generating optical element that produces a line beam from a light beam separated by at least one of the first and second light-separating portions.

17. The multibeam generator as claimed in claim 16, wherein:

    the beam splitter separates the light beam generated by the light source into a first reflected beam reflected by the first light-separating portion, a second reflected beam reflected by the second light separating portion, and a transmitted beam formed of both light transmitted through the first light-separating portion and light transmitted through the second light-separating portion; and
    the line-beam-generating optical element receives at least one of the first reflected beam, the second reflected beam, and the transmitted beam and converts the received beam to a line beam.

18. A line-beam-generating optical system comprising:

    a light source generating a laser beam;
    a collimating lens converting light emitted from the light source into collimated light;
    a triangular prism having three side surfaces, a first side surface and a second side surface of the three side surfaces forming an apex angle, a first light-separating portion being formed on the first surface and a second light-separating portion being formed on the second surface, the triangular prism receiving the collimated light at the apex angle and separating the collimated light into four light beams; and
    a line-beam-generating optical element disposed on at least one optical path of the four light beams emitted from the triangular prism for converting at least one light beam into at least one line beam.

19. The line-beam-generating optical system as claimed in claim 18, further comprising:

a reflecting mirror provided between the triangular prism and the line-beam-generating optical element, the reflecting mirror reflecting the light beam emitted from the triangular prism to change an optical path of the light beam

20. The line-beam-generating optical system as claimed in claim 18 or 19, wherein the light source has a laser emitting surface that emits laser light, and the apex angle of the triangular prism confronts the laser emitting surface.

21. The line-beam-generating optical system as claimed in any of claims 18 to 20, further comprising an optical element converting a cross-sectional beam shape of the collimated light formed by the collimating lens into a substantially circular shape.

22. The line-beam-generating optical system as claimed in claim 21, wherein the optical element comprises an anamorphic lens that changes a circularity of the collimated light.

23. The line-beam-generating optical system as claimed in any of claims 18 to 22, further comprising a dove prism located between the triangular prism and the line-beam-generating optical element, the dove prism rotating a cross-sectional shape of the light beam.

24. The line-beam-generating optical system as claimed in any of claims 18 to 23, wherein each of the first and second light-separating portions are formed of a light-separating film.

25. A laser marking apparatus comprising:

a laser generating a light beam;
the beam splitter of any of claims 1 to 14, the beam splitter receiving the light beam generated by the laser, the apparatus further including a line-beam-generating optical element generating a line beam from a light beam separated by at least one of the first and second light-separating portions; and
a support unit supporting the laser, the beam splitter, and the line-beam-generating optical element.

26. The laser marking apparatus as claimed in claim 25, wherein:

the-beam splitter separates the light beam generated by the laser into a first reflected beam reflected by the first light-separating portion, a second reflected beam reflected by the second light-separating portion, and a transmitted beam formed of both light transmitted through the first light-separating portion and light transmitted through the second light-separating portion; and
the line-beam-generating optical element receives at least one of the first reflected beam, the second reflected beam, and the transmitted beam and converts the received beam to a line beam.

27. The laser marking apparatus as claimed in claim 25, further comprising:

a light-separating element provided along a path of at least one of the light reflected off the first light-separating portion, the light reflected off the second light-separating portion, and the light transmitted through the first and second light-separating portions, thereby generating at least four light beams;
the line-beam-generating optical element receiving at least one of the at least four light beams and converting the light beams to line beams.

28. The laser marking apparatus as claimed in any of claims 25 to 27, further comprising a collimating lens disposed between the laser and the beam splitter for converting light emitted from the laser into collimated light;

the light transmissive member being formed of a triangular prism having three side surfaces, a first side surface and a second side surface of the three side surfaces forming an apex angle, a third side surface of the three side surfaces opposing the apex angle, a first light-separating portion being formed on the first surface and a second light-separating portion being formed on the second surface, the triangular prism receiving the collimated light at the apex angle and separating the collimated light into four light beams in cooperation with the first and second light-separating portions.

29. The laser-marking apparatus as claimed in claim 28, wherein the triangular prism emits a first light beam and a second light beam from the third side surface, emits a third light beam from the first side surface, and emits a fourth light beam from the second side surface;
the laser marking apparatus further comprising:

a first line-beam-generating optical element disposed along an optical path of the first light beam for converting the first light beam into a line beam; and
a second line-beam-generating optical element disposed along an optical path of the second light beam for converting the second light beam into a line beam.

30. The laser marking apparatus as claimed in claim 29, wherein the first and second light-separating portions emit the third and fourth light beams in a direction substantially perpendicular to an incidence direction of the collimated light.

31. The laser marking apparatus as claimed in any of claims 25 to 30, further comprising an optical path changing element disposed along at least one of the optical paths of the first and second light beams, the optical path changing element converting at least one of the optical paths so that light travels in a horizontal direction.

32. The laser marking apparatus as claimed in claim 31, wherein:

the optical path changing element is disposed along the optical path of the first light beam and converts the optical path of the first light beam so that the first light beam travels in a horizontal direction;
the first line-beam-generating optical element is provided for receiving the first light beam from the optical path changing element and generates a horizontal line beam from the first light beam; and
the second line-beam-generating optical element generates a vertical line beam from the second light beam.

33. The laser marking apparatus as claimed in claim 29, further comprising a dove prism disposed between the triangular prism and the line-beam-generating optical element along at least one of the optical paths of the first and second light beams, the dove prism rotating a cross-sectional beam shape of at least one of the first and second light beams.

34. The laser marking apparatus as claimed any of claims 25 to 30, further comprising an optical element disposed along an optical path between the collimating lens and the triangular prism, the optical element changing a cross-sectional shape of a light beam to a substantially circular shape.

35. The laser marking apparatus as claimed in claim 28, further comprising a reflecting mirror provided along an optical path of at least one light beam emitted from the triangular prism, the reflecting mirror modifying the optical path of the light beam.

36. The laser marking apparatus as claimed in claim 28, wherein the laser has a laser emitting surface that emits laser light, and the apex angle of the triangular prism confronts the laser emitting surface.

37. The laser marking apparatus as claimed in claim 28, further comprising an optical element converting a cross-sectional beam shape of the collimated light formed by the collimating lens into a substantially circular shape.

38. The laser marking apparatus as claimed in claim 37, wherein the optical element comprises an anamorphic lens that changes a circularity of the collimated light.

39. The laser marking apparatus as claimed in claim 28, further comprising a dove prism provided along an optical path of at least one of four light beams emitted from the triangular prism, the dove prism rotating a cross-sectional beam shape of the at least one of four light beams.

# FIG.1

# FIG.2

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

# FIG.16

120

R1

101    102    103    105    T1    UP

T2    104    107    106    DOWN

R2

# FIG.17(a)

N

B

A

# FIG.17(b)

N

B

A

# FIG.17(c)

# FIG.18

# FIG.19

# FIG.20

# FIG.21

# FIG.22

# FIG.23

# FIG.24

# FIG.25

FIG.26

# FIG.27

# FIG.28

# FIG.29

# FIG.30

# FIG.31

# FIG.32

# FIG.33